# FASCICULE DE BREVET EUROPEEN

(11) **EP 4 455 438 B1**
(45) Date de publication et mention de la délivrance du brevet: **31.12.2025**
(21) Numéro de dépôt: 24169863.8
(22) Date de dépôt: 12.04.2024
(51) Int. Cl.: E06B 9/17, E06B 9/174

(54) **SUPPORT DE TUBE DE VOLET ROULANT, INSTALLATION DE PROTECTION, NOTAMMENT DE VOLET ROULANT, ET PROCÉDÉ D'ASSEMBLAGE ASSOCIÉS**
ROLLADENROHRHALTER, SCHUTZEINRICHTUNG, INSBESONDERE FÜR ROLLADEN, UND ENTSPRECHENDES MONTAGEVERFAHREN
SUPPORT FOR A ROLLER SHUTTER TUBE, PROTECTION INSTALLATION, IN PARTICULAR FOR A ROLLER SHUTTER, AND ASSOCIATED ASSEMBLY METHOD

(30) Priorité: 13.04.2023 FR 2303717
(43) Date de publication de la demande: 30.10.2024
(73) Titulaire: Zurflüh-Feller, 25150 Pont-de-Roide-Vermondans (FR)
(72) Inventeur: OLMI, Marc, 25150 Pont-de-Roide (FR); BROGLY, Sébastien, 90850 Essert (FR)
(74) Mandataire: Lavoix

(56) Documents cités:
- EP-A1- 2 314 820
- EP-A1- 3 757 342
- EP-A2- 2 000 626

## Description

La présente invention concerne un support de tube de volet roulant, une installation de protection comprenant un tel support et un procédé d'assemblage d'un tel support.

Dans les bâtiments dont les murs donnant sur l'extérieur présentent des ouvertures recevant une menuiserie telle qu'une porte ou une fenêtre, ces ouvertures sont généralement équipées d'une installation de protection, par exemple contre les intrusions, avec un écran tel qu'un volet roulant, ou bien une installation de protection solaire, avec par exemple un écran tel qu'une toile solaire, un volet roulant, un store à lames ou un brise-soleil orientable, dit aussi « BSO », ou bien encore une installation de protection anti-insecte, avec une moustiquaire.

En général, l'écran de protection est attaché à un tube, qui est logé dans un volume de réception ménagé en partie supérieure d'une ouverture. Selon des exemples non limitatifs, le volume de réception est délimité par un coffre de l'installation de volet roulant, ou bien est ménagé directement dans le mur, par exemple dans un linteau, etc. Le tube comprend deux paliers d'extrémité, qui sont chacun supportés par un flasque, de sorte que le tube est monté pivotant, par rapport aux flasques, autour d'un axe d'enroulement.

Chaque flasque est généralement supporté par une patte, laquelle est fixée à d'autres éléments de l'installation de protection, en particulier chaque patte est généralement emmanchée dans une coulisse respective de guidage de l'écran de protection. Une tulipe de guidage du tablier est prévue au niveau de chaque coulisse, pour guider le tablier dans la coulisse correspondante. Chaque tulipe est généralement clipsée sur la patte. Chaque flasque forme, avec la tulipe associée, un support du volet roulant.

FR-3 115 809-A1 décrit, par exemple, un support de tube comprenant un flasque, une patte et une tulipe. Le flasque comprend une languette élastique découpée dans le corps du flasque et des pions fixés au corps du flasque, tandis que la patte comprend des encoches complémentaires des pions, l'assemblage du flasque à la patte étant verrouillé par la languette élastique. Lors de l'assemblage, l'effort nécessaire pour repousser la languette élastique est généralement important. En outre, pour sécuriser l'assemblage, une étape supplémentaire est nécessaire, l'installateur déformant la languette à l'aide d'un outil, ce qui demande un effort important. EP 2 314 820 A1 décrit un autre support de tube comprenant un flasque, une patte et une tulipe.

C'est à ces problèmes qu'entend plus particulièrement remédier l'invention, en proposant un support de tube qui soit plus facile à assembler, en particulier sans demander d'effort important.

À cet effet, l'invention a pour objet un support, configuré pour supporter un tube d'enroulement d'une installation de volet roulant.

Selon l'invention, le support comprend :
- un flasque, qui présente une face avant s'étendant orthogonalement à un axe d'enroulement, et une face arrière opposée à la face avant, le flasque comprenant :
   - une empreinte configurée pour recevoir un palier d'extrémité du tube d'enroulement, et
   - une portion d'attache,
- une patte, qui comprend :
   - un tenon de fixation, qui présente une forme aplatie et allongée, le tenon s'étendant dans un plan de tenon selon un axe de fixation et étant configuré pour être fixé à la portion d'attache du flasque, et
   - une ferrure, qui présente une forme allongée et aplatie s'étendant dans un plan de ferrure selon un axe de ferrure, la ferrure étant configurée pour être solidarisée à un mur, la ferrure présentant une extrémité libre et une extrémité captive, qui est opposée à l'extrémité libre et qui est reliée au tenon,
- une tulipe, qui ménage un conduit d'emmanchement de la ferrure et qui comprend un premier clip élastique configuré pour coopérer, notamment par complémentarité de forme, avec un premier orifice ménagé dans la ferrure, de manière à fixer la tulipe à la ferrure lorsque la ferrure est emmanchée dans le conduit, la tulipe et la patte fixée à la tulipe formant ensemble un premier sous-ensemble dans une configuration emmanchée,
dans lequel :
- la portion d'attache comprend une paroi de fond, qui est managée en retrait de la face avant et qui est reliée au reste de la portion d'attache par deux parois latérales, les parois latérales étant sensiblement parallèles à une direction d'insertion de la portion d'attache et délimitant entre elles un passage pour le tenon,
- la portion d'attache comprend une ouverture, qui est découpée dans le flasque et qui définit un côté avant de la paroi de fond, le passage débouchant du côté de la face arrière par l'ouverture,
- le tenon est configuré pour être inséré dans le passage selon un mouvement d'insertion, le mouvement d'insertion étant un mouvement de translation parallèle à la direction d'insertion, l'axe de fixation étant aligné avec la direction d'insertion, de sorte qu'une extrémité du tenon, traversant l'ouverture, est en appui contre la face arrière du flasque,
- lorsque la ferrure est emmanchée dans le conduit, formant le premier sous-ensemble, et que le tenon est inséré dans le passage, les mouvements du premier sous-ensemble par rapport au flasque sont limités à une translation parallèle à la direction d'insertion,
- la tulipe comprend un deuxième clip élastique, qui est configuré pour coopérer avec un deuxième orifice ménagé sur le flasque lorsque le premier sous-ensemble est en configuration emmanchée, de manière à empêcher les mouvements de translation du premier sous-ensemble par rapport au flasque parallèlement à la direction d'insertion, le support étant dans une configuration assemblée lorsque le deuxième clip élastique coopère avec le deuxième orifice.

Grâce à l'invention, l'assemblage du support est particulièrement facile et rapide, ne nécessitant aucun effort particulier, le maintien des pièces du support étant réalisé au moyens des premier et deuxième clips de la tulipe. L'effort à fournir correspond à la déformation des clips élastiques, cet effort étant réduit et peu pénible.

Selon des aspects avantageux mais non obligatoires de l'invention, un tel support peut incorporer une ou plusieurs des caractéristiques suivantes prises isolément ou selon toute combinaison techniquement admissible :
- la patte est dans une position assemblée par rapport au flasque lorsque le support est dans la configuration assemblée,
   alors que le flasque comprend une butée, qui est configurée pour prendre appui contre la patte de manière à limiter le mouvement d'insertion du tenon dans le passage, la patte étant en appui contre la butée lorsque la patte est en position assemblée par rapport au flasque,
   et que le deuxième clip est configuré pour empêcher les mouvements de translation du premier sous-ensemble par rapport au flasque selon une direction opposée à la direction d'insertion.
- Le plan de tenon et le plan de ferrure sont coplanaires l'un avec l'autre, le tenon et la ferrure formant un coude, l'axe de fixation étant incliné par rapport à l'axe de ferrure,
   alors que la butée est ménagée de manière à prendre appui sur un bord intérieur de la ferrure, d'un côté intérieur du coude.
- La tulipe comprend une paroi externe et une paroi interne, qui sont agencées en regard l'une de l'autre et qui sont reliées l'une à l'autre par un fond, la paroi interne, la paroi externe et le fond étant configurés pour guider un bord d'un écran 24 de l'installation de volet roulant d'un côté avant du fond,
   alors que la tulipe comprend aussi une deuxième paroi, qui est agencée en regard d'un coté arrière du fond, le côté arrière étant orienté à l'opposé du côté avant, la deuxième paroi et le fond délimitant ensemble le conduit de la tulipe et étant reliés l'un à l'autre par des guides,
   que les guides sont configurés pour guider la ferrure emmanchée dans le conduit, de sorte que la ferrure est maintenue à distance en regard de la deuxième paroi, ménageant un interstice,
   et que l'interstice est configuré pour que, lorsque le support est en configuration assemblée :
      - une partie de la paroi de fond de la portion d'attache est reçue dans l'interstice,
      - la face avant du flasque est en appui contre le côté arrière du fond de la tulipe.

L'invention concerne aussi un sous-ensemble de montage, comprenant :
- deux supports de tube, au moins un des supports étant tel que défini précédemment, et
- un tube d'enroulement avec deux paliers d'extrémité, chacun des palier étant supporté par un flasque respectif, le tube étant monté pivotant par rapport aux flasques.

L'invention concerne aussi une installation de protection, notamment de volet roulant, comprenant :
- un sous-ensemble de montage tel que défini précédemment,
- un écran de protection, notamment un écran de volet roulant, qui attaché au tube d'enroulement et qui est configuré pour s'enrouler autour du tube ou se dérouler du tube, en fonction des mouvements de rotation du tube,
dans lequel les supports sont solidaires d'un mur et sont situés au-dessus d'une ouverture ménagée dans ce mur.

Selon un autre aspect, l'invention concerne un procédé d'assemblage d'un flasque tel que décrit précédemment, le procédé d'assemblage comprenant les étapes successives consistant à :
a) emmancher la ferrure dans le conduit de la tulipe jusqu'à ce que le premier clip élastique coopère avec le premier orifice ménagé sur la ferrure, de manière à former le premier sous-ensemble,
b) ensuite, insérer le tenon dans le passage selon la direction d'insertion, jusqu'à ce que le deuxième clip élastique coopère avec le deuxième orifice ménagé sur le flasque, de manière à former le support.

L'invention sera mieux comprise, et d'autres avantages de celle-ci apparaîtront plus clairement à la lumière de la description qui va suivre, d'un mode de réalisation d'un flasque de volet roulant, d'une installation de volet roulant et d'un procédé d'assemblage, conformes à son principe, donnée uniquement à titre d'exemple et faite en référence aux dessins annexés, dans lesquels :
[Fig 1] la figure 1 est une vue en perspective d'une installation de volet roulant conforme à l'invention, l'installation de volet roulant comprenant un sous-ensemble de montage, qui inclut un tube d'enroulement supporté par deux supports ;
[Fig 2] la figure 2 représente, sur deux inserts a) et b), un détail IIa) du sous-ensemble de montage de la figure 1, observé selon deux angles de vue différents, certaines pièces étant cachées ;
[Fig 3] la figure 3 est une vue en perspective partiellement éclatée du sous-ensemble de la figure 2, certaines pièces étant cachées ;
[Fig 4] la figure 4 représente, sur trois inserts a), b) et c), un support du sous-ensemble de montage de la figure 2, le support étant représenté, respectivement, en perspective éclatée selon deux angles de vue différents, et dans une première configuration intermédiaire ;
[Fig 5] la figure 5 représente en perspective, sur deux inserts a) et b), le support de la figure 3, le support étant représenté respectivement dans la première configuration intermédiaire, certaines pièces étant cachées, et dans une configuration assemblée, et
[Fig 6] la figure 6 représente respectivement, sur deux inserts a) et b), deux coupes, selon deux plans parallèles Via et Vlb à la figure 5, du sous-ensemble de montage de la figure 3 en configuration assemblé.

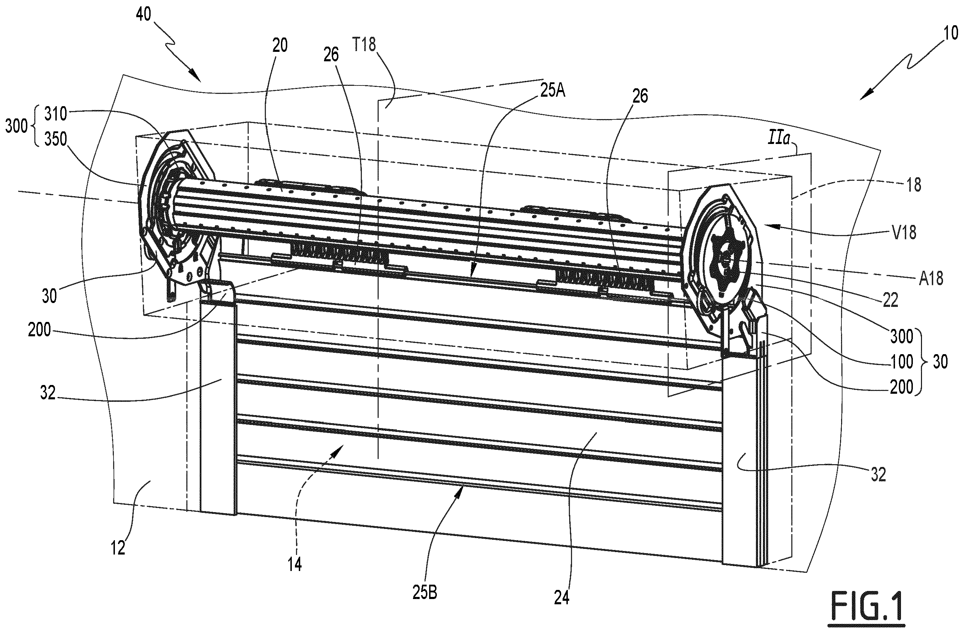

Une installation 10 de protection est schématiquement représentée sur la figure 1. L'installation 10 est ici une installation de protection contre les intrusions, qui comprend un volet roulant. L'installation 10 de protection est donc ici une installation de volet roulant.

L'installation 10 est fixée sur un mur 12, supposé plan et vertical, dans lequel est ménagée une ouverture 14 qui traverses le mur 12. L'ouverture 14 est ici occultée par un écran 24 de protection, qui appartient à l'installation de protection 10. L'écran 24 de protection est ici un tablier de volet roulant. Selon des alternatives non limitatives, l'écran 24 est une toile solaire, voire une moustiquaire, etc.

L'installation 10 comprend ici un coffre 18, qui est schématiquement représenté en traits mixtes. Le coffre 18 est fixé au mur 12, au-dessus de l'ouverture 14. Le coffre 18 présente une forme allongée globalement parallélépipédique et s'étend dans sa longueur suivant un axe de coffre A18. L'axe de coffre A18 est supposé horizontal. La description est faite en relation à l'orientation des pièces de l'installation 10 telles que représentées sur les dessins, sachant qu'il peut en être autrement dans la réalité. L'installation 10 présente une structure globalement symétrique par rapport à un plan transversal T18 de l'installation, le plan transversal T18 étant orthogonal à l'axe de coffre A18.

Le coffre 18 ménage un volume de réception V18 pour d'autres pièces de l'installation 10, comme décrit dans la suite. Selon des exemples non limitatifs, le coffre 18 est fabriqué par un assemblage de planches.

Selon une première alternative non représentée, le volume de réception V18 est délimité en partie par le mur 12, par exemple est managé dans le mur 12, en particulier dans un linteau délimitant l'ouverture 14 en partie supérieure de l'ouverture 14. Cette configuration correspond à un montage dit « en demi-linteau ». Selon une deuxième alternative non représentée, le volume de réception V18 est essentiellement contenu dans le linteau, selon une configuration de montage dite « en linteau ». Ces alternatives ne sont pas limitatives.

L'installation 10 comprend un tube 20, qui est ici un tube d'enroulement de l'écran 24, et deux supports 30, qui sont solidaires du mur 12 et qui sont configurés pour supporter le tube 20. Les deux supports 30 sont agencés symétriquement par rapport au plan transversal T18 de l'installation 10, les deux supports 30 présentant globalement une structure symétrique l'un par rapport à l'autre. Ce qui est valable pour l'un des deux supports 30 est transposable à l'autre support 30.

Le tube 20 comprend deux extrémités opposées, qui sont chacune équipées d'un palier 22 d'extrémité. Chacun des paliers 22 d'extrémité est supporté par un support 30 respectif, de sorte que le tube 20 est monté pivotant par rapport aux supports 30, autour de l'axe de coffre A18.

Chacun des support 30 supporte respectivement un des paliers 22 d'extrémité du tube 20 d'enroulement, de sorte que le tube 20 est monté pivotant par rapport aux support 30 autour de l'axe d'enroulement A18. Les deux supports 30 assemblés au tube 20 forment ensemble un sous-ensemble de montage 40 de l'installation 10.

Une extrémité haute 25A de l'écran 24 est attaché au tube 20, ici par l'intermédiaire de deux verrous 26 appartenant à l'installation 10. On comprend que selon le sens de rotation du tube 20 autour de l'axe de coffre A18, l'écran 24 s'enroule autour du tube 20, ou se déroule, une extrémité basse 25B de l'écran 24 montant ou descendant devant l'ouverture 14. Par extension, l'axe de coffre A18 est aussi un axe d'enroulement du tube 20.

La rotation du tube 20 est commandée par un utilisateur au moyen d'un dispositif d'entrainement. Le dispositif d'entrainement n'est pas représenté. Selon les configurations, le dispositif d'entrainement est soit manuel, par exemple avec une manivelle et un système d'engrenages ou avec un dispositif à courroie, soit motorisé, avec un moteur électrique. Dans le cas d'un dispositif d'entrainement motorisé, une partie du moteur est généralement reçue dans le tube 20, tandis qu'une tête pivotante du moteur dépasse du tube et forme un des paliers du tube.

Chaque support 30 est solidarisé au mur 12, c'est-à-dire fixé au mur 12, soit directement, soit par l'intermédiaire d'un autre élément de l'installation 10. Dans l'exemple illustré, chaque support 30 est fixé à une coulisse 32 respective, la coulisse 32 étant fixée au mur 12. L'installation 10 comprend ainsi deux coulisses 32, qui sont situées en regard l'une de l'autre, symétriquement par rapport au plan transversal T18. Chaque coulisse 32 s'étend verticalement le long d'un côté de l'ouverture 14, les deux coulisses 32 servant à guider l'écran 24, notamment lors des mouvements de montée ou de descente de l'extrémité basse 25B de l'écran 24.

Dans l'exemple illustré, chaque palier 22 comprend une pièce avec une forme d'étoile, qui est reçue dans une empreinte de forme complémentaire ménagée dans le support 30. Chaque palier 22 ainsi reçu dans l'empreinte complémentaire est bloqué en rotation, par rapport au support 30, autour de l'axe d'enroulement A18. La forme du palier 22 n'est pas limitative du moment que le palier 22 est bloqué en rotation lorsqu'il est dans l'empreinte 312.

Dans l'exemple illustré, l'empreinte 312 en forme d'étoile reçoit le palier 22 du tube 20 d'enroulement. Bien entendu, le flasque 300 est configuré pour recevoir tout type de pièce présentant une forme compatible avec l'empreinte 312, notamment une pièce d'adaptation, telle que décrite dans la demande publiée FR3118479 (A1).

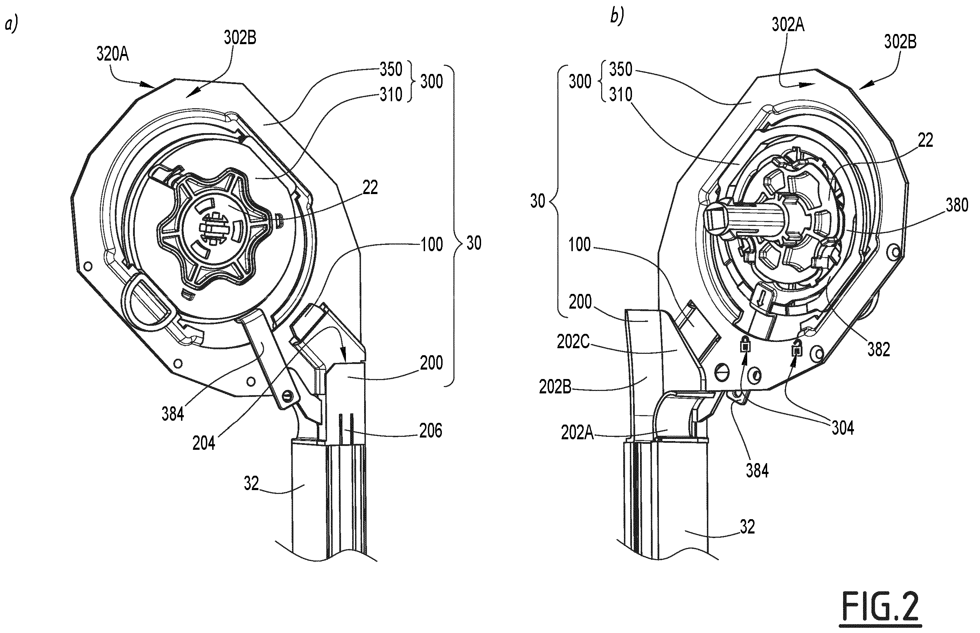

Le support 30 représenté sur la droite de la figure 1 est aussi représenté à plus grand échelle, avec la coulisse 32 associée et le palier 22 d'extrémité associés, sur la figure 2. Le reste de la description étant faite en référence à ce support 30.

Chaque support 30 comprend une patte 100, une tulipe 200 et un flasque 300.

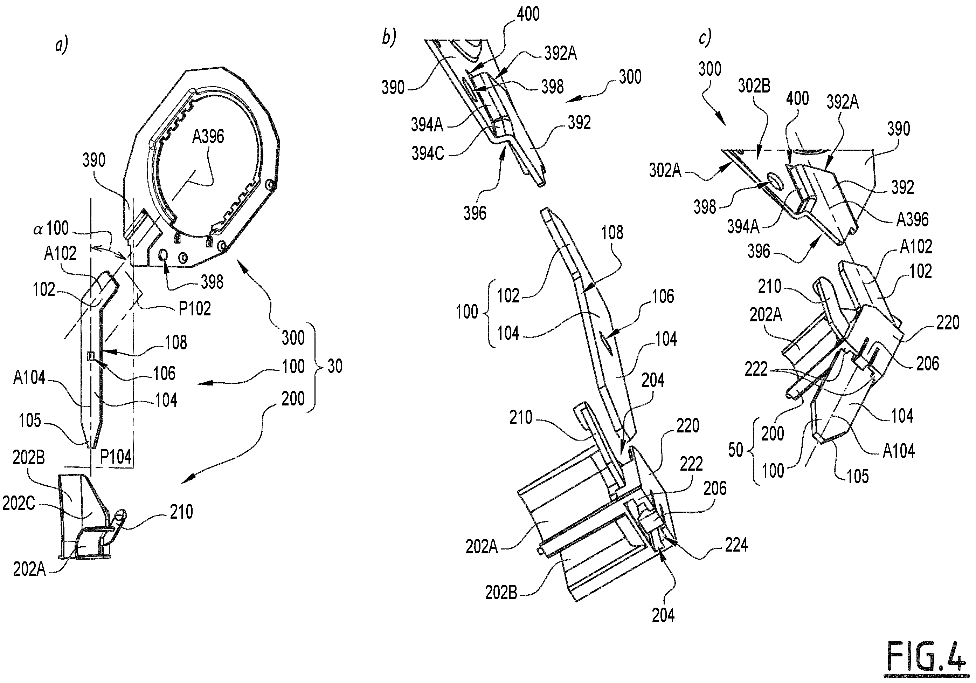

La patte 100 est ici ménagée dans une plaque de métal, de préférence en acier. La patte 100 est par exemple fabriquée par découpage. En référence à la figure 4, la patte 100 comprend un tenon 102 de fixation, par lequel la patte 100 est configurée pour être assemblée au flasque 300, et une ferrure 104, par laquelle la patte 100 est configurée pour être solidarisée au mur 12. La ferrure 104 présentant une extrémité libre 105, qui présente ici une forme effilée, et une extrémité captive, qui est opposée à l'extrémité libre 105 et qui est reliée au tenon 102. Dans l'exemple illustré, les pattes 100 sont solidarisées au mur 12 par l'intermédiaire des coulisses 32, la ferrure 104 de chaque patte 100 étant fixée à une coulisse 32 respective, laquelle étant fixée au mur 12.

Le tenon 102 présente une forme aplatie et allongée, le tenon 102 s'étendant dans un plan de tenon P102 selon un axe de fixation A102. La ferrure 104 présente une forme allongée et aplatie s'étendant dans un plan de ferrure P104 selon un axe de ferrure A104.

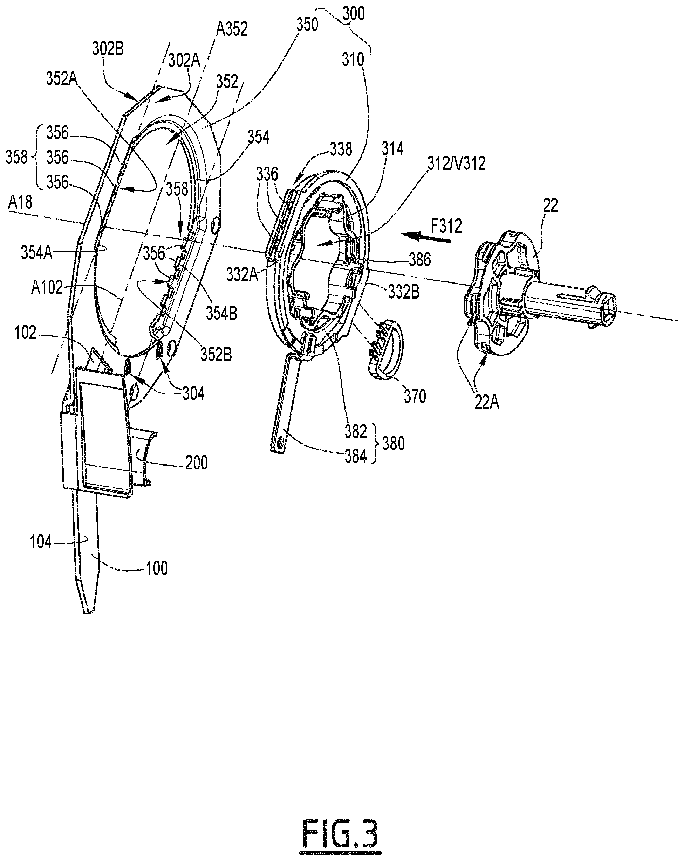

En référence aux figures 2 et 3, la tulipe 200 comprend une paroi externe 202A et une paroi interne 202B, qui sont agencées en regard l'une de l'autre et qui sont reliées l'une à l'autre par un fond 202C. La paroi externe 202A et la paroi interne 202B divergent l'une de l'autre, d'où le nom de « tulipe ». La paroi externe 202A, la paroi interne 202B et le fond 202C sont configurés pour guider un bord de l'écran 24 de protection d'un côté avant du fond 202C, de manière à limiter les frottements de l'écran 24 sur la coulisse 32 correspondante.

La tulipe 200 ménage un conduit 204 d'emmanchement de la ferrure 104, en particulier pour l'emmanchement de l'extrémité libre 104 de la ferrure 104. La tulipe 200 comprend un premier clip élastique 206 configuré pour coopérer, notamment par complémentarité de forme, avec un premier orifice 106 ménagé dans la ferrure 104, de manière à fixer la tulipe 200 à la ferrure 104 lorsque la ferrure 104 est emmanchée dans le conduit 204, dans une position emmanchée de la patte 100 par rapport à la tulipe 200. Lorsque la ferrure 104 est en position emmanchée dans le conduit 204, la tulipe 200 et la patte 100 forment ensemble un premier sous-ensemble 50, qui est alors dans une configuration dite « emmanchée ».

Le flasque 300 présente une face avant 302A, qui est globalement plane et qui s'étend orthogonalement à l'axe d'enroulement A18, et une face arrière 302B opposée à la face avant 302A. Le flasque 300 comprend une portion de fixation 310, laquelle comprend une empreinte 312, configurée pour recevoir un des paliers 22 d'extrémité du tube 20 d'enroulement. La face avant 302A est tournée vers le tube 20 lorsque le tube 20 est assemblé au support 30.

Le flasque 300 comprend aussi une portion périphérique 350, qui est configurée pour être solidarisé au reste de l'installation 10 de volet roulant et dans laquelle est ménagée une lumière 352 d'accueil de la portion de fixation 310. La lumière 352, qui présente ici une forme de trou oblong, comprend deux bords droits 352A et 352B opposés qui sont parallèles à un axe de réglage A352. La forme de la lumière 352 n'est pas limitative.

La portion de fixation 310 est configurée pour être assemblée à la portion périphérique 350 en étant reçue dans la lumière 352 dans une configuration assemblée du flasque 300. La portion de fixation 310 est ici réalisé en matériau polymère synthétique, et est produite de préférence par injection à chaud. La portion périphérique 350 est ici réalisée dans une plaque de métal, de préférence en acier, et est produite notamment par découpage et/ou emboutissage.

Comme décrit plus loin, la portion de fixation 310 est avantageusement réglable en position par rapport à la portion périphérique 350 le long de l'axe de réglage A352. Il est ainsi possible d'ajuster une position du tube 20 par rapport aux supports 30, lors de l'assemblage de l'installation 10, notamment en fonction de la taille de l'écran 24.

Dans l'exemple illustré, la portion de fixation 310 comprenant une paroi 314, qui définit l'empreinte 312. La paroi 314, et par extension l'empreinte 312, ont une forme cylindrique centrée sur l'axe d'enroulement A18, la paroi 314 délimitant un volume interne V312 qui est configurée pour recevoir un des paliers 22 d'extrémité du tube 20 d'enroulement selon un mouvement d'insertion F312 du palier 22 dans l'empreinte 312. La paroi 314 présence un côté interne, orienté du côté du volume interne V312, et un côté externe, orienté à l'opposé du côté interne.

Le mouvement d'insertion F312, qui est représenté par une flèche à la figure 3, est un mouvement de translation parallèle à l'axe d'enroulement A18. Le palier 22 présente une forme complémentaire de l'empreinte 312, de sorte que le palier 22 est bloqué en rotation par rapport à la portion de fixation 310, et par extension par rapport au flasque 300, autour de l'axe d'enroulement A18.

Avantageusement, le flasque 30 intègre un dispositif de verrouillage, qui facilite l'assemblage du palier 22 au flasque 30. Ainsi, la portion de fixation 310 comprend aussi une ouverture 380, qui est ménagée au travers de la paroi et qui débouche dans le volume interne. Dans l'exemple illustré, la portion de fixation 310 comprend trois ouvertures 316, qui sont réparties régulièrement autour de l'axe d'enroulement A18.

Le flasque 300 comprend aussi une pièce de verrouillage 380, qui présente ici globalement une forme d'anneau 382 avec une languette de commande 384. La languette de commande 384 est reliée à l'anneau 382 et est configurée pour être actionnée par un installateur, de manière à commander les mouvements de la pièce de verrouillage 380.

L'anneau 382 est agencé d'un côté externe de la paroi 314 et coopère avec la paroi 314, notamment par glissement de surfaces, de sorte que l'anneau 382 est guidé en rotation par rapport à la portion de fixation 310 autour de l'axe d'enroulement A18.

La pièce de verrouillage 380 comprend au moins une protubérance 386, qui est ménagée en saillie sur l'anneau 382 et qui s'étend depuis l'anneau 382 de manière centrifuge à l'axe d'enroulement A18. Chaque protubérance 386 est associée à une ouverture 316 respective.

La pièce de verrouillage 380 est mobile par rapport à la portion de fixation 310 en entre une position de verrouillage, dans laquelle chaque protubérance 386 de la pièce de verrouillage 380 dépasse de l'ouverture 316 associée dans le volume interne V312 de l'empreinte 312, et une position retirée, dans laquelle chaque protubérance 386 ne dépasse pas dans le volume interne V312 de l'empreinte 312.

Chaque protubérance 386 est configurée pour être reçue dans un creux complémentaire 22A, ménagé dans le palier 22, de manière à empêcher les mouvements de translation du palier 22 par rapport à la portion de fixation lorsque le palier est reçu dans l'empreinte et que la pièce de verrouillage est en position de verrouillage. Chaque protubérance 386 forme ainsi une portion de blocage de la pièce de verrouillage 380.

Les protubérances 386 ont ici une forme de dent, tandis que les creux complémentaires 22A ont une forme de rainure. Ces formes ne sont pas limitatives. Dans l'exemple illustré, chaque ouverture 316 est ménagée dans un plan transversal à l'axe d'enroulement A18.

Dans l'exemple illustré, l'anneau 382 est guidé en rotation par rapport à la pièce de fixation 310, aussi les positions de blocage et de retrait sont des positions angulaires de l'anneau 382 par rapport à la portion de fixation 310 autour de l'axe d'enroulement A18. La languette de commande 384 permet ainsi de déplacer la pièce de verrouillage 380 entre sa position retirée et sa position de verrouillage.

Le flasque 300 comprend avantageusement des inscriptions 304, par exemple des pictogrammes et/ou des caractères alphanumériques, qui sont agencées de manière à indiquer à l'utilisateur, en fonction d'une position angulaire de la languette 384 de commande autour de l'axe d'enroulement A18, si la pièce de verrouillage 380 est dans l'une ou l'autre parmi la position de verrouillage ou la position retirée.

Dans l'exemple illustré, les inscriptions 304 sont des gravures, qui sont situées sur la portion périphérique 350 et qui représentent ici un cadenas fermé et un cadenas ouvert.

La portion de fixation 310 et la portion périphérique 350 comprennent chacun une face avant, qui forment ensemble la face avant 302A du flasque 300 lorsque le la portion de fixation 310 est assemblé à la portion périphérique 350, comme représenté en figure 2, où le flasque 300 est dans une configuration dite « engagée ».

Le flasque 300 comprend des moyens de butée, qui sont ménagés dans au moins un des éléments choisis parmi la portion périphérique 350 et la portion de fixation 310. Les moyens de butée sont configurés pour limiter les mouvements relatifs de la portion de fixation 310 par rapport à la portion de périphérique 350 à des mouvements de translation suivant l'axe de montage A352 lorsque les moyens de butée sont dans une configuration engagée, le flasque étant alors dans la configuration engagée.

Dans l'exemple illustré, les moyens de butée comprennent un rebord périphérique 354, qui est ménagé sur la portion périphérique 350 en bordure de la lumière 352. Le rebord périphérique 354 inclut deux segments droits 354A et 354B, qui sont chacun ménagés en retrait de la face avant de la portion périphérique 350 et qui forment les bords droits 352A et 352B de de la lumière 352. Le rebord périphérique 354 est ici discontinu, de manière à ne pas générer les mouvements de la languette 384.

Les moyens de butée comprennent aussi deux segments complémentaires 332A et 332B, qui sont ménagés sur la portion de fixation 310, chaque segment complémentaire 332A ou 332B étant configuré pour coopérer, notamment par complémentarité de formes, de manière à glisser contre un segment droit 354A ou 354B respectif lorsque le flasque 30 est dans la configuration engagée. Avantageusement, lorsque le flasque 300 est en configuration engagée, la face avant de la portion de fixation 310 est coplanaire avec la face avant de la portion périphérique 350. On évite ainsi les risques d'interférence avec l'écran 24 lors de l'utilisation de l'installation 10. L'agencement et la forme des moyens de butée ne sont pas limitatifs.

Le flasque 300 comprend aussi des moyens de réglage. Les moyens de butée et les moyens de réglage sont configurés de sorte que, lors de l'assemblage de la portion de fixation 310 à la portion périphérique 350, la portion de fixation 310 est ajustable en position par rapport à la portion périphérique 350 le long de l'axe de réglage A352.

Dans l'exemple illustré, les moyens de réglage comprennent des crans 356, qui sont régulièrement répartis le long d'au moins un des bords droits 352A ou 352B de la lumière 352, les crans 356 ménagés le long d'un même bord formant une rangée 358 de crans. Dans l'exemple illustré, des crans 356 sont ménagés le long de chacun des bords droits 352A et 352B, la portion périphérique comprenant ainsi deux rangées 358 de crans 356. Les crans 356 ont ici un profil rectangulaire et sont ménagés par des encoches découpées dans les segments droits 354A et 354B. Deux crans 356 successifs sont ainsi séparés par une encoche, un pas entre deux crans successifs 354 étant égal à une longueur, mesurée parallèlement à l'axe de réglage A352, d'un cran et d'une encoche.

Les moyens de réglage comprennent aussi des dents 336, qui sont ménagées sur la portion de fixation 310 et qui sont configurées pour coopérer, par complémentarité de forme, avec une partie des crans 356, de manière à empêcher les mouvements de translation de la portion de fixation 310 par rapport à la portion périphérique 350 le long de l'axe de réglage A352 lorsque le flasque est en configuration engagée. Les dents 336 sont alors engagées dans certains des crans 356. Par extension les moyens de réglage sont aussi dits dans une configuration engagée.

Les dents 336 ont ici chacune un profil correspondant aux encoches entre deux crans 356 successifs. De préférence, les dents 336 ont le même profil que les crans 356. Dans l'exemple illustré, plusieurs dents 336 sont ménagées le long de chaque segment droit 332A et 332B de la portion de fixation 310, formant des rangées 338 de dents 336.

Ainsi, lors de l'assemblage du flasque 300, la position de la portion de fixation 310 par rapport à la portion périphérique 350 le long de l'axe de réglage A352 est ajustable manière incrémentale, selon un pas de réglage correspondant au un pas entre deux crans 356 successifs. Le pas de réglage dépend de la forme des crans 356 et des dents 336, ce qui permet un réglage plus fin par rapport aux dispositifs connus de l'art antérieur, en particulier un réglage indépendant de la taille de l'empreinte 312, qui accueille le palier 22. Dans l'exemple illustré, le pas entre deux crans 356 successifs est égal à 10 mm, à comparer à un diamètre du palier 22 en forme d'étoile, de l'ordre de 60 mm. Chaque rangée 358 de crans 356 présente ici cinq encoches, tandis que chaque rangée 338 de dents 336 comprend ici trois dents 336. Il est ainsi possible de choisir entre trois positions différentes.

Avantageusement, des inscriptions sont prévues sur le flasque 300, de manière à indiquer à l'installateur la position dans laquelle il doit assembler la portion de fixation 310 et la portion périphérique 350. Les inscriptions ne sont pas représentées.

Plus généralement, on comprend que le réglage en position de la portion de fixation 310 par rapport à la portion périphérique 350 est possible avec une seule rangée 358 de crans 356. La configuration à deux rangées 358 de crans est cependant préférée car elle permet une meilleure reprise des efforts transmis au cours de l'utilisation de l'installation 10, ce qui réduit les risques de rupture accidentelle de la pièce de fixation 310.

On détaille à présent le support 30, en référence aux figures 4 à 6.

Le plan de tenon P102 et le plan de ferrure P104 sont ici coplanaires l'un avec l'autre, le tenon 102 et la ferrure 104 formant un coude. Autrement dit, l'axe de fixation A102 est incliné par rapport à l'axe de ferrure A104 d'un angle α100. L'angle α100 est nul lorsque l'axe de fixation A102 est aligné sur l'axe de ferrure A104. Dans le cadre de l'invention, l'angle α100 est non nul. Typiquement, l'angle α100 est compris entre 10° et 90°, de préférence compris entre 20° et 70°, de préférence encore compris entre 30° et 60°. Dans l'exemple illustré, l'angle α100 est égal à 45°. La ferrure 104 comprend un bord intérieur 108, qui est situé d'un côté intérieur du coude formé par le tenon 102 et la ferrure 104.

Le flasque 300 comprend, outre la portion de fixation 310, une portion d'attache 390, par laquelle le flasque 300 est configuré pour être fixé au tenon 102. Dans l'exemple illustré, le flasque comprend la portion périphérique 350 et la portion de fixation 310, la portion d'attache 390 étant ici une partie de la portion périphérique 350. Bien entendu, les principes de l'invention sont transposables à d'autres structures de flasques.

La portion d'attache 390 comprend une paroi de fond 392, qui est managée en retrait de la face avant 302A du flasque 300 et qui est reliée au reste de la portion d'attache 390 par deux parois latérales 394A et 394B. Les deux parois latérales 394A et 394B sont sensiblement parallèles l'une à l'autre, sont agencées en regard l'une de l'autre et délimitent entre elles, avec la paroi de fond 392, un passage 396 pour le tenon 102. Les deux parois latérales 394A et 394B définissent une direction d'insertion A396 de la portion d'attache 390.

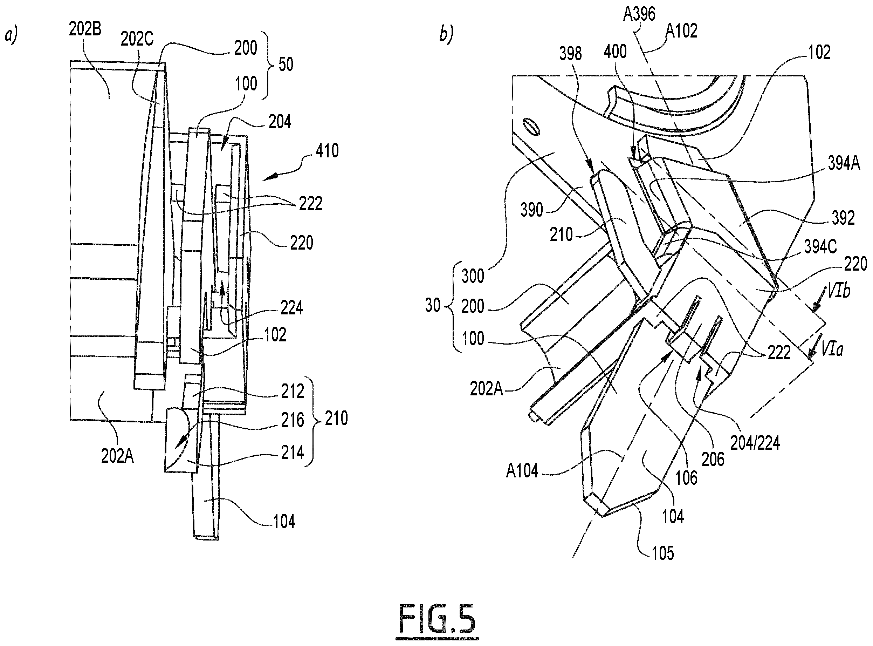

La tulipe 200 comprend, outre le premier clip 206 d'assemblage à la ferrure 104, un deuxième clip 210, qui est configuré pour coopérer avec un deuxième orifice 398 ménagé sur le flasque 300, de manière à empêcher les mouvements de translation du premier sous-ensemble 50 par rapport au flasque 300 parallèlement à la direction d'insertion A396, lorsque le tenon 102 est reçu dans le passage 396. Le support 30 est alors dans une configuration assemblée, comme représenté à la figure 5a).

Dans l'exemple illustré, le deuxième clip 210 comprend une patte élastique 212, de forme allongée, qui est reliée par une extrémité au reste de la tulipe 200 et qui comprend, à une autre extrémité, un renflement 214, qui présente ici une forme de cylindre de section circulaire, avec un biseau 216. Le deuxième orifice 398 présente une forme complémentaire du deuxième clip 210, soit ici une forme cylindrique, configurée pour recevoir le renflement 214. Le biseau 214 permet de déformer élastiquement la patte 212 lors de l'assemblage du premier sous-ensemble 410 au flasque 300.

L'assemblage du support 30 est ainsi particulièrement facile et rapide à mettre en oeuvre, et ne nécessite aucun effort particulier. Ainsi, selon des exemples, un procédé d'assemblage du support 30 comprend les étapes successives consistant à :
a) emmancher la ferrure 104 dans le conduit 204 de la tulipe 200 jusqu'à ce que le premier clip 206 élastique coopère avec le premier orifice 106 ménagé sur la ferrure 104, de manière à former le premier sous-ensemble 410,
b) ensuite, insérer le tenon 102 dans le passage 396 selon la direction d'insertion A396, jusqu'à ce que le deuxième clip 210 élastique coopère avec le deuxième orifice 398 ménagé sur le flasque 300, de manière à former le support 30.

En référence à la figure 5 a), la tulipe 200 comprend avantageusement une deuxième paroi 220, qui est agencée en regard du fond 202C de la tulipe 200, d'un côté arrière du fond 202C, le côté arrière étant orienté à l'opposé du côté avant. La deuxième paroi 220 et le fond 202C délimitent ensemble le conduit 204 de la tulipe 200. La deuxième paroi 220 et le fond 202C sont reliés l'un à l'autre par des guides 222, qui sont configurés pour guider la ferrure 104 emmanchée dans le conduit 204, de sorte que la ferrure 104 est maintenue à distance en regard de la deuxième paroi 220, ménageant un interstice 224 entre la ferrure 104 et la deuxième paroi 220. L'interstice 224 est donc une portion du conduit 204. Les guides 222 présentent ici une forme parallélépipédique. Lorsque la ferrure 104 est emmanchée dans le conduit 204, la ferrure 104 est guidée par les guides 222, le mouvement de la ferrure 104 parallèle étant un mouvement de translation.

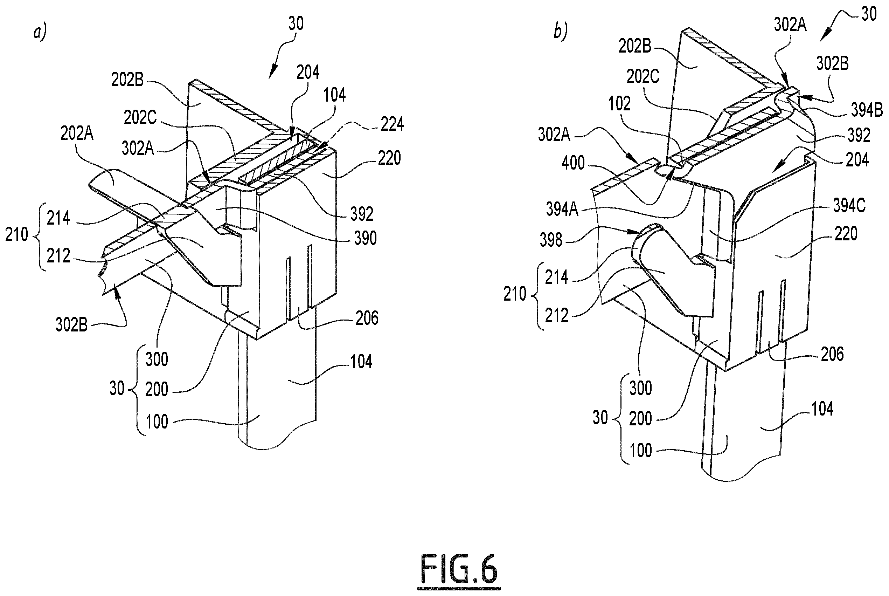

Comme illustré a la figure 6a), l'interstice 224 est configuré pour que, lorsque le support est en configuration assemblée, une partie de la paroi de fond 392 de la portion d'attache 390 est reçue dans l'interstice 224, tandis que la face avant 302A du flasque 300est en appui contre le côté arrière du fond de la tulipe.

La portion d'attache 380 comprend une ouverture 400, qui est découpée dans le flasque 300 et qui délimite un côté avant 392A de la paroi de fond 392, le passage 386 débouchant du côté de la face arrière 302B du flasque 300 par l'ouverture 400. L'ouverture 400 est ici une fente, qui s'étend orthogonalement à la direction d'insertion A396.

Le flasque 300 comprend une butée, qui est configurée pour prendre appui contre la patte 100 de manière à limiter le mouvement d'insertion du tenon 102 dans le passage 396, la patte 100 étant en appui contre la butée lorsque la patte 100 est en position assemblée par rapport au flasque 300.

Dans l'exemple illustré, la butée est formée par une troisième paroi 394C, qui prolonge une des deux parois latérales 394A et 394B reliant la paroi de fond 392 au reste de la portion d'attache 390. La troisième paroi 394C, et par extension la butée, est ménagée de manière à prendre appui sur le bord intérieur 108 de la ferrure, d'un côté intérieur du coude formé par la ferrure 104 et le tenon 102.

Le deuxième clip 210 est configuré pour coopérer avec le deuxième orifice 380 lorsque la patte 100 est en butée contre la troisième paroi 394C. Lorsque le support 30 est utilisé dans une installation 10, comme illustré sur la figure 1, la gravité tend à maintenir la patte 100 en butée contre la troisième paroi 394C.

En variante non représentée, la butée est ménagée autrement, par exemple la butée est formée du côté opposé à la paroi de fond 312 par rapport à l'ouverture 400, de sorte qu'une extrémité libre du tenon 102 vienne en appui contre la butée, limitant le mouvement d'insertion du tenon 102 dans le passage 396.

Dans l'exemple illustré, la paroi de fond 392 est formée, d'une seule pièce, par découpage et déformation d'une plaque métallique. La paroi de fond 362 forme ainsi une surface continue, sur laquelle le tenon vient en appui. On comprend qu'en l'absence de la tulipe 200, la patte 100 n'est pas parfaitement guidée en translation le long de la direction d'insertion A396. Par exemple, si une extrémité du tenon est insérée dans l'ouverture 400, il est possible de faire pivoter la patte 100 de fixation par rapport au flasque 300, autour d'un axe sensiblement aligné sur le bord avant 392A de la paroi de fond 392. La tulipe 200. assemblée à la patte 100 pour former le premier sous-ensemble 410, empêche ce mouvement de rotation, limitant les mouvements de la patte 100 par rapport au flasque 200 à un mouvement de translation selon la direction d'insertion A396.

En variante non représentée, la paroi de fond 392 est réalisée en plusieurs parties, par exemple en deux parties, qui sont découpées lors de la fabrication du flasque 300, les deux parties de la paroi de fond, situées en retrait de la face avant 302A du flasque 300, étant séparée par un pont de matière qui reste aligné avec la face avant 302A du flasque. La paroi de fond 392 et le pont de matière délimitent entre eux le passage 396, de sorte que lorsque le tenon est inséré dans le passage, le tenon est guidé en translation le long de la direction d'insertion A396. L'essentiel des efforts mécaniques, en particulier les efforts de torsion de la patte 100 insérée dans le passage 396, est ainsi repris par le flasque 300 et la patte 100, qui sont ici des pièces métalliques, tandis que le deuxième clip 210 de la tulipe 200 sert essentiellement à sécuriser l'assemblage de la patte 100 et du flasque 300.

Dans l'exemple illustré, l'installation 10 de volet roulant comprend deux flasques 300, les portions périphériques 350 de ces deux flasques 300 étant symétriques l'une par rapport à l'autre. Il faut donc deux types de flasques 300 pour assembler les deux supports 30 de l'installation 10 de protection.

En variante non représenté, chaque flasque 300 présente une forme symétrique par rapport à un plan orthogonal à l'axe de réglage A352, en particulier comprend deux portion d'attache 390 ménageant chacune un passage 396 de réception d'un tenon 102. Des flasques 300 d'un même type peuvent ainsi servir pour assembler les deux supports 30 de l'installation 10 de protection, ce qui réduit le nombre de pièces détachées différentes.

Les modes de réalisation et les variantes mentionnées ci-dessus peuvent être combinés entre eux pour générer de nouveaux modes de réalisation de l'invention.

## Revendications

1. Support (30) de tube (20), configuré pour supporter un tube (20) d'enroulement d'une installation (10) de volet roulant, le support (30) comprenant :
- un flasque (300), qui présente une face avant (302A) s'étendant orthogonalement à un axe d'enroulement (A18), et une face arrière (302B) opposée à la face avant, le flasque (300) comprenant :
• une empreinte (312) configurée pour recevoir un palier (22) d'extrémité du tube (20) d'enroulement, et
• une portion d'attache (390),
- une patte (100), qui comprend :
• un tenon (102) de fixation, qui présente une forme aplatie et allongée, le tenon (102) s'étendant dans un plan de tenon (P102) selon un axe de fixation (A102) et étant configuré pour être fixé à la portion d'attache (390) du flasque (300), et
• une ferrure (104), qui présente une forme allongée et aplatie s'étendant dans un plan de ferrure (P104) selon un axe de ferrure (A104), la ferrure (104) étant configurée pour être solidarisée à un mur (12), la ferrure (104) présentant une extrémité libre (105) et une extrémité captive, qui est opposée à l'extrémité libre et qui est reliée au tenon (102),
- une tulipe (200), qui ménage un conduit (204) d'emmanchement de la ferrure (104) et qui comprend un premier clip (206) élastique configuré pour coopérer, notamment par complémentarité de forme, avec un premier orifice (106) ménagé dans la ferrure (104), de manière à fixer la tulipe (200) à la ferrure (104) lorsque la ferrure (104) est emmanchée dans le conduit (204), la tulipe (200) et la patte (100) fixée à la tulipe (200) formant ensemble un premier sous-ensemble (410) dans une configuration emmanchée,
dans lequel :
- la portion d'attache (390) comprend une paroi de fond (392), qui est managée en retrait de la face avant (392A) et qui est reliée au reste de la portion d'attache (390) par deux parois latérales (394A, 394B), les parois latérales étant sensiblement parallèles à une direction d'insertion (A396) de la portion d'attache (390) et délimitant entre elles un passage (396) pour le tenon (102),
- la portion d'attache (390) comprend une ouverture (400), qui est découpée dans le flasque (300) et qui définit un côté avant de la paroi de fond (392), le passage (396) débouchant du côté de la face arrière (302B) par l'ouverture (400),
- le tenon (102) est configuré pour être inséré dans le passage (396) selon un mouvement d'insertion, le mouvement d'insertion étant un mouvement de translation parallèle à la direction d'insertion (A396), l'axe de fixation (A102) étant aligné avec la direction d'insertion, de sorte qu'une extrémité du tenon (102), traversant l'ouverture (400), est en appui contre la face arrière (302B) du flasque (300),
- lorsque la ferrure (104) est emmanchée dans le conduit (204), formant le premier sous-ensemble (410), et que le tenon (102) est inséré dans le passage (396), les mouvements du premier sous-ensemble (410) par rapport au flasque (300) sont limités à une translation parallèle à la direction d'insertion (A396),
- la tulipe (200) comprend un deuxième clip élastique (210), qui est configuré pour coopérer avec un deuxième orifice (398) ménagé sur le flasque (300) lorsque le premier sous-ensemble (410) est en configuration emmanchée, de manière à empêcher les mouvements de translation du premier sous-ensemble (410) par rapport au flasque (300) parallèlement à la direction d'insertion, le support (30) étant dans une configuration assemblée lorsque le deuxième clip (210) élastique coopère avec le deuxième orifice (398).

2. Support (30) de tube (20) selon la revendication 1, dans lequel :
- la patte (100) est dans une position assemblée par rapport au flasque (300) lorsque le support (30) est dans la configuration assemblée,
- le flasque (300) comprend une butée (394C), qui est configurée pour prendre appui contre la patte (100) de manière à limiter le mouvement d'insertion du tenon (102) dans le passage (396), la patte (100) étant en appui contre la butée lorsque la patte (100) est en position assemblée par rapport au flasque (300),
- le deuxième clip (210) est configuré pour empêcher les mouvements de translation du premier sous-ensemble par rapport au flasque (300) selon une direction opposée à la direction d'insertion.

3. Support (30) de tube (20) selon la revendication 2, dans lequel :
- le plan de tenon (P102) et le plan de ferrure (P104) sont coplanaires l'un avec l'autre, le tenon (102) et la ferrure (104) formant un coude, l'axe de fixation (A102) étant incliné par rapport à l'axe de ferrure (A104),
- la butée (394C) est ménagée de manière à prendre appui sur un bord intérieur (108) de la ferrure (104), d'un côté intérieur du coude.

4. Support (30) de tube (20) selon l'une quelconque des revendications précédentes, dans lequel :
- la tulipe (200) comprend une paroi externe (202B) et une paroi interne (202A), qui sont agencées en regard l'une de l'autre et qui sont reliées l'une à l'autre par un fond (202C), la paroi interne, la paroi externe et le fond étant configurés pour guider un bord d'un écran 24 de l'installation (10) de volet roulant d'un côté avant du fond (202C),
- la tulipe (200) comprend aussi une deuxième paroi (220), qui est agencée en regard d'un coté arrière du fond (202C), le côté arrière étant orienté à l'opposé du côté avant, la deuxième paroi (220) et le fond (202C) délimitant ensemble le conduit (204) de la tulipe (200) et étant reliés l'un à l'autre par des guides (222),
- les guides (222) sont configurés pour guider la ferrure (104) emmanchée dans le conduit (204), de sorte que la ferrure (104) est maintenue à distance en regard de la deuxième paroi (220), ménageant un interstice (224),
- l'interstice est configuré pour que, lorsque le support (30) est en configuration assemblée :
• une partie de la paroi de fond (392) de la portion d'attache (390) est reçue dans l'interstice (224),
• la face avant (302A) du flasque (300) est en appui contre le côté arrière du fond (202C) de la tulipe (200).

5. Sous-ensemble (40) de montage, comprenant
- deux supports (30) de tube (20), au moins un des supports étant conforme à l'une quelconque des revendications précédentes,
- un tube (20) d'enroulement avec deux paliers (22) d'extrémité, chacun des palier (22) étant supporté par un flasque (300) respectif, le tube (20) étant monté pivotant par rapport aux flasques (300).

6. Installation (10) de protection, notamment de volet roulant, comprenant :
- un sous-ensemble de montage (40) selon la revendication précédente,
- un écran (24) de protection, notamment un écran de volet roulant, qui attaché au tube (20) d'enroulement et qui est configuré pour s'enrouler autour du tube (20) ou se dérouler du tube (20), en fonction des mouvements de rotation du tube (20),
dans lequel :
- les supports (30) sont solidaires d'un mur (12) et sont situés au-dessus d'une ouverture (14) ménagée dans ce mur.

7. Procédé d'assemblage d'un support (30) conforme à l'une quelconque des revendications 1 à 4, le procédé d'assemblage comprenant les étapes successives consistant à :
a) emmancher la ferrure (104) dans le conduit (204) de la tulipe (200) jusqu'à ce que le premier clip (206) élastique coopère avec le premier orifice (106) ménagé sur la ferrure (104), de manière à former le premier sous-ensemble (410),
b) ensuite, insérer le tenon (102) dans le passage (396) selon la direction d'insertion (A396), jusqu'à ce que le deuxième clip (210) élastique coopère avec le deuxième orifice (398) ménagé sur le flasque (300), de manière à former le support (30).

## Patentansprüche

1. Halterung (30) für ein Rohr (20), die konfiguriert ist, um ein Wickelrohr (20) einer Rollladenanlage (10) zu tragen, die Halterung (30) umfassend:
- einen Flansch (300), der eine Vorderseite (302A), die sich orthogonal zu einer Wickelachse (A18) erstreckt, und eine Rückseite (302B) gegenüber der Vorderseite aufweist, der Flansch (300) umfassend:
• eine Vertiefung (312), die konfiguriert ist, um ein Endlager (22) des Wickelrohrs (20) aufzunehmen, und
• einen Anbringungsabschnitt (390),
- eine Lasche (100), die Folgendes umfasst:
• einen Befestigungszapfen (102), der eine abgeflachte und längliche Form aufweist, wobei sich der Zapfen (102) in einer Zapfenebene (P102) entlang einer Befestigungsachse (A102) erstreckt und konfiguriert ist, um an dem Anbringungsabschnitt (390) des Flanschs (300) befestigt zu werden, und
• einen Beschlag (104), der eine längliche, abgeflachte Form aufweist, die sich in einer Beschlagebene (P104) entlang einer Beschlagachse (A104) erstreckt, wobei der Beschlag (104) konfiguriert ist, um an einer Wand (12) befestigt zu werden, wobei der Beschlag (104) ein freies Ende (105) und ein gefangenes Ende gegenüber dem freien Ende aufweist und mit dem Zapfen (102) verbunden ist,
- eine Muffe (200), die einen Kanal (204) zum Einstecken des Beschlags (104) ausbildet und die einen ersten elastischen Clip (206) umfasst, der konfiguriert ist, um insbesondere durch Formkomplementarität mit einer ersten Öffnung (106) zusammenzuwirken, die in dem Beschlag (104) ausgebildet ist, sodass die Muffe (200) an dem Beschlag (104) befestigt wird, wenn der Beschlag (104) in den Kanal (204) eingesteckt ist, wobei die Muffe (200) und die an der Muffe (200) befestigte Lasche (100) in einer eingesteckten Konfiguration zusammen eine erste Teilanordnung (410) bilden, wobei:
- der Anbringungsabschnitt (390) eine Bodenwand (392) umfasst, die von der Vorderseite (392A) zurückversetzt ausgebildet ist und die durch zwei Seitenwände (394A, 394B) mit dem Rest des Anbringungsabschnitts (390) verbunden ist, wobei die Seitenwände im Wesentlichen parallel zu einer Einführrichtung (A396) des Anbringungsabschnitts (390) sind und untereinander einen Durchgang (396) für den Zapfen (102) begrenzen,
- der Anbringungsabschnitt (390) eine Öffnung (400) umfasst, die in den Flansch (300) geschnitten ist und eine Vorderseite der Bodenwand (392) definiert, wobei der Durchgang (396) durch die Öffnung (400) auf der Seite der Rückseite (302B) mündet,
- der Zapfen (102) konfiguriert ist, um mit einer Einführbewegung in den Durchgang (396) eingeführt zu werden, wobei die Einführbewegung eine translatorische Bewegung parallel zu der Einführrichtung (A396) ist wobei die Befestigungsachse (A102) mit der Einführrichtung ausgerichtet ist, sodass ein Ende des Zapfens (102), das durch die Öffnung (400) verläuft, an der Rückseite (302B) des Flanschs (300) anliegt,
- wenn der Beschlag (104) in den Kanal (204) eingesteckt, der die erste Teilanordnung (410) bildet, und der Zapfen (102) in den Durchgang (396) eingeführt ist, die Bewegungen der ersten Teilanordnung (410) in Bezug auf den Flansch (300) auf eine Translation parallel zu der Einführrichtung (A396) beschränkt sind,
- die Muffe (200) eine zweite elastische Klammer (210) umfasst, die konfiguriert ist, um mit einer zweiten Öffnung (398) zusammenzuwirken, die an dem Flansch (300) ausgebildet ist, wenn die erste Teilanordnung (410) in einer eingesteckten Konfiguration ist, um Translationsbewegungen der ersten Teilanordnung (410) in Bezug auf den Flansch (300) parallel zu der Einführrichtung zu verhindern, wobei die Halterung (30) in einer zusammengebauten Konfiguration ist, wenn die zweite elastische Klammer (210) mit der zweiten Öffnung (398) zusammenwirkt.

2. Halterung (30) für ein Rohr (20) nach Anspruch 1, wobei:
- die Lasche (100) in einer zusammengebauten Position in Bezug auf den Flansch (300) vorliegt, wenn die Halterung (30) in der zusammengebauten Konfiguration ist,
- der Flansch (300) einen Anschlag (394C) umfasst, der konfiguriert ist, um an der Lasche (100) anzuliegen, um die Einführbewegung des Zapfens (102) in den Durchgang (396) zu begrenzen, wobei die Lasche (100) an dem Anschlag anliegt, wenn die Lasche (100) in der zusammengebauten Position in Bezug auf den Flansch (300) ist,
- die zweite Klammer (210) konfiguriert ist, um Translationsbewegungen der ersten Teilanordnung in Bezug auf den Flansch (300) in einer Richtung entgegengesetzt zu der Einführrichtung zu verhindern.

3. Halterung (30) für ein Rohr (20) nach Anspruch 2, wobei:
- die Zapfenebene (P102) und die Beschlagsebene (P104) koplanar zueinander sind, wobei der Zapfen (102) und der Beschlag (104) eine Biegung bilden, wobei die Befestigungsachse (A102) in Bezug auf die Beschlagachse (A104) geneigt ist,
- der Anschlag (394C) ausgebildet ist, um an einem inneren Rand (108) des Beschlags (104) an einer Innenseite der Biegung anzuliegen.

4. Halterung (30) für ein Rohr (20) nach einem der vorherigen Ansprüche, wobei:
- die Muffe (200) eine Außenwand (202B) und eine Innenwand (202A) umfasst, die einander gegenüberliegend angeordnet sind und durch einen Boden (202C) miteinander verbunden sind, wobei die Innenwand, die Außenwand und der Boden konfiguriert sind, um einen Rand eines Schirms 24 der Rollladenanlage (10) von einer Vorderseite des Bodens (202C) aus führt,
- die Muffe (200) auch eine zweite Wand (220) umfasst, die gegenüber einer Rückseite des Bodens (202C) angeordnet ist, wobei die Rückseite von der Vorderseite weg gerichtet ist, wobei die zweite Wand (220) und der Boden (202C) zusammen den Kanal (204) der Muffe (200) begrenzen und durch Führungen (222) miteinander verbunden sind, wobei die Führungen (222) konfiguriert sind, um den in den Kanal (204) eingesteckten Beschlag (104) führen, sodass der Beschlag (104) gegenüber der zweiten Wand (220) auf Abstand gehalten wird, wodurch ein Zwischenraum (224) ausgebildet wird,
- wenn die Halterung (30) in der zusammengebauten Konfiguration ist, der Zwischenraum zu Folgendem konfiguriert ist:
• ein Teil der Bodenwand (392) des Anbringungsabschnitts (390) wird in dem Zwischenraum (224) aufgenommen,
• die Vorderseite (302A) des Flanschs (300) liegt an der Rückseite des Bodens (202C) der Muffe (200) an.

5. Montage-Teilanordnung (40), umfassend
- zwei Halterungen (30) für das Rohr (20), wobei mindestens eine der Halterungen einem der vorherigen Ansprüche entspricht,
- ein Wickelrohr (20) mit zwei Endlagern (22), wobei jedes der Lager (22) von einem jeweiligen Flansch (300) getragen wird, wobei das Rohr (20) in Bezug auf die Flansche (300) schwenkbar montiert ist.

6. Schutzanlage (10), insbesondere eine Rollladenanlage, umfassend:
- eine Montage-Teilanordnung (40) nach dem vorherigen Anspruch,
- einen Schutzschirm (24), insbesondere eine Rollladenschürze, der an dem Rohr (20) angebracht und konfiguriert ist, um abhängig von den Drehbewegungen des Rohrs (20) um die Aufwickelachse um das Rohr (20) aufgewickelt oder von dem Rohr (20) abgewickelt zu werden,
wobei:
- die Halterung (30) fest mit einer Wand (12) verbunden sich und sich über einer Öffnung (14) befinden, die in dieser Wand ausgebildet ist.

7. Verfahren zum Zusammenbauen einer Halterung (30) nach einem der Ansprüche 1 bis 4, wobei das Verfahren zum Zusammenbau die folgenden aufeinanderfolgenden Schritte umfasst:
a) Einstecken des Beschlags (104) in den Kanal (204) der Muffe (200), bis die erste elastische Klammer (206) mit der ersten Öffnung (106) zusammenwirkt, die an dem Beschlag (104) ausgebildet ist, um die erste Teilanordnung (410) zu bilden,
b) anschließend Einführen des Zapfens (102) in den Durchgang (396) entlang der Einführrichtung (A396), bis die zweite elastische Klammer (210) mit der zweiten Öffnung (398) zusammenwirkt, die an dem Flansch (300) ausgebildet ist, um die Halterung (30) zu bilden.

## Claims

1. A support (30) for a tube (20), configured to support a winding tube (20) of a roller shutter installation (10), the support (30) comprising:
- a flange (300), which has a front face (302A) extending orthogonally to a winding axis (A18), and a rear face (302B) opposite the front face, the flange (300) comprising:
• an indentation (312) configured to receive an end bearing (22) of the winding tube (20), and
• an attachment portion (390),
- a lug (100), which comprises:
• a fastening tenon (102), which has a flattened and elongated shape, the tenon (102) extending in a tenon plane (P102) along a fastening axis (A102) and being configured to be fastened to the attachment portion (390) of the flange (300), and
• a fitting (104), which has an elongate and flattened shape extending in a fitting plane (P104) along a fitting axis (A104), the fitting (104) being configured to be secured to a wall (12), the fitting (104) having a free end (105) and a captive end, which is opposite the free end and is connected to the tenon (102),
- a tulip (200), which provides a duct (204) for inserting the fitting (104) and which comprises a first resilient clip (206) configured to cooperate, in particular by shape mating, with a first orifice (106) provided in the fitting (104), so as to fasten the tulip (200) to the fitting (104) when the fitting (104) is sleeved into the duct (204), the tulip (200) and the lug (100) fixed to the tulip (200) together forming a first subassembly (410) in an sleeved configuration, in which:
- the attachment portion (390) comprises a bottom wall (392), which is set back from the front face (302A) and which is connected to the rest of the attachment portion (390) by two side walls (394A, 394B), the side walls being substantially parallel to a direction of insertion (A396) of the attachment portion (390) and delimiting between them a passage (396) for the tenon (102),
- the attachment portion (390) comprises an opening (400), which is cut out in the flange (300) and which defines a front side of the bottom wall (392), the passage (396) opening out on the side of the rear face (302B) through the opening (400),
- the tenon (102) is configured so as to be inserted into the passage (396) according to an insertion movement, the insertion movement being a translational movement parallel to the insertion direction (A396), the fastening axis (A102) being aligned with the insertion direction, so that one end of the tenon (102), passing through the opening (400), bears against the rear face (302B) of the flange (300),
- when the fitting (104) is sleeved into the duct (204), forming the first sub-assembly (410), and the tenon (102) is inserted into the passage (396), the movements of the first sub-assembly (410) relative to the flange (300) are limited to a translation parallel to the direction of insertion (A396),
- the tulip (200) comprises a second resilient clip (210), which is configured to cooperate with a second orifice (398) provided on the flange (300) when the first sub-assembly (410) is in the sleeved configuration, so as to prevent translational movements of the first sub-assembly (410) relative to the flange (300) parallel to the direction of insertion, the support (30) being in an assembled configuration when the second resilient clip (210) cooperates with the second orifice (398).

2. The support (30) for a tube (20) according to claim 1, wherein:
- the lug (100) is in an assembled position relative to the flange (300) when the support (30) is in the assembled configuration,
- the flange (300) comprises a stop (394C), which is configured to bear against the lug (100) so as to limit the insertion movement of the tenon (102) in the passage (396), the lug (100) bearing against the stop when the lug (100) is in the assembled position relative to the flange (300),
- the second clip (210) is configured to prevent translational movements of the first sub-assembly relative to the flange (300) in a direction opposite to the insertion direction.

3. The support (30) for a tube (20) according to claim 2, wherein:
- the tenon plane (P102) and the fitting plane (P104) are coplanar with each other, the tenon (102) and the fitting (104) forming a bend, the fastening axis (A102) being inclined with respect to the fitting axis (A104),
- the stop (394C) is arranged so as to bear on an inner edge (108) of the fitting (104), on an inner side of the bend.

4. The support (30) for a tube (20) according to any one of the preceding claims, wherein:
- the tulip (200) comprises an outer wall (202B) and an inner wall (202A), which are arranged facing each other and which are connected to each other by a bottom (202C), the inner wall, the outer wall and the bottom being configured to guide an edge of a screen 24 of the roller shutter installation (10) on a front side of the bottom (202C),
- the tulip (200) also comprises a second wall (220), which is arranged facing a rear side of the bottom (202C), the rear side being oriented away from the front side, the second wall (220) and the bottom (202C) together delimiting the duct (204) of the tulip (200) and being connected to each other by guides (222), - the guides (222) are configured to guide the fitting (104) sleeved into the duct (204), so that the fitting (104) is held at a distance facing the second wall (220), leaving an interstice (224),
- the interstice is configured so that, when the support (30) is in the assembled configuration:
• part of the bottom wall (392) of the attachment portion (390) is received in the interstice (224),
• the front face (302A) of the flange (300) rests against the rear side of the bottom (202C) of the tulip (200).

5. A mounting sub-assembly (40), comprising
- two supports (30) for a tube (20), at least one of the supports conforming to any one of the preceding claims,
- a winding tube (20) with two end bearings (22), each of the bearings (22) being supported by a respective flange (300), the tube (20) being mounted so as to pivot relative to the flanges (300).

6. A protective installation (10), in particular a roller shutter installation, comprising:
- a mounting sub-assembly (40) according to the preceding claim,
- a protective screen (24), in particular a roller shutter screen, which is attached to the winding tube (20) and is configured to wind around the tube (20) or unwind from the tube (20), depending on the rotational movements of the tube (20),
in which:
- the supports (30) are integral with a wall (12) and are located above an opening (14) made in this wall.

7. A method for assembling a support (30) in accordance with any one of claims 1 to 4, the assembly method comprising the successive steps of:
a) sleeving the fitting (104) into the duct (204) of the tulip (200) until the first resilient clip (206) cooperates with the first orifice (106) provided on the fitting (104), so as to form the first sub-assembly (410),
b) then insert the tenon (102) into the passage (396) in the direction of insertion (A396), until the second resilient clip (210) cooperates with the second orifice (398) provided on the flange (300), so as to form the support (30).
